# EUROPEAN PATENT APPLICATION

(11) **EP 2 172 898 A1**
(43) Date of publication of application: **07.04.2010**
(21) Application number: 09167681.7
(22) Date of filing: 12.08.2009
(51) Int. Cl.: G06Q 30/00

(54) **System and method for providing community-based advertising term disambiguation**

(30) Priority: 28.08.2008 US 92741 P; 05.05.2009 US 436067
(71) Applicant: Palo Alto Research Center Incorporated, Palo Alto, California 94304 (US)
(72) Inventor: Stefik, Mark J, Portola Valley, CA 94028 (US); Lee, Lawrence, Menlo Park, CA 94025 (US); Greene, Daniel H, Sunnyvale, CA 94087 (US); Chi, Ed H, Palo Alto, CA 94306 (US)
(74) Representative: Skone James, Robert Edmund

(57) **Abstract**

A computer-implemented system and method for providing community-based advertising term disambiguation is provided. Articles of digital information and a plurality of social indexes that are each associated with a social community are maintained. Each social index includes topics that each relate to one or more of the articles. The social community exhibiting the most closely-matched similarity to the advertising content is chosen based on their social indexes (84). The advertising content with the articles related to the topics included in the social index of the social community chosen is placed (85).

## Description

### Field

This application relates in general to online advertising and, in particular, to a system and method for providing community-based advertising term disambiguation.

### Background

Advertising for online products and services has become a primary source of revenue on the Web. Typically, online advertising is served with other Web content through various means, including, for example, banner, text, image, and pop-up advertisements. Online advertisements, for instance, may be directly included on a Web page requested by a user, or indirectly included with search results. The placement of online advertisements is often guided by the matching of key words associated with competing potential advertisements against the text of target Web pages.

Auction-based search advertising dominates the market for online advertising. Direct advertising sales, such as pioneered by Yahoo! Inc., Sunnyvale, CA, achieved only modest success. Under this model, paid commercial banner advertisements were embedded in Web pages to attract user traffic to linked-in advertiser Web sites. However, this approach had unnecessary costs, and suffered from a lack of transparency in pricing.

Advertising auctions removed the pricing hurdles by opening online advertising to near real-time inter-advertiser competition. For instance, U.S. Patent No. 6,285,987, issued September 4, 2001, the disclosure of which is incorporated by reference, discloses using computational agents to bid for space by matching key words from advertisements to Web sites. As well, Overture, a service offered by Yahoo!, first integrated advertising with online searching. Overture also uses a bidding mechanism that matches advertisements to search queries. Other approaches have since been developed. For instance, Ad Sense, offered by Google Inc., Mountain View, CA, places advertisements on different parts of a Web page as determined by auction. Advertisers bid for key words that are used to match online advertisements, or advertisements are associated with a general search query that is matched against the contents of Web pages.

Untargeted advertising places advertisements on Web pages without any nexus to the underlying content, whereas targeted advertising only places those advertisements deemed germane. Recently, effective advertisement targeting has taken new regency in response to declining click-through rates. For instance, in 2006, click-through rates on untargeted banner advertisements for major Web portal destinations, such as Yahoo!, Microsoft, and AOL, declined from 0.75% to 0.27%, while the average click-through rate across the whole Web for banner advertisements was only about 0.2%. Holahan, C., "So Many Advertisements, So Few Clicks," Business Week, Nov. 12, 2007, p. 38. This drop in click-through rates has increased interest in targeted advertisements.

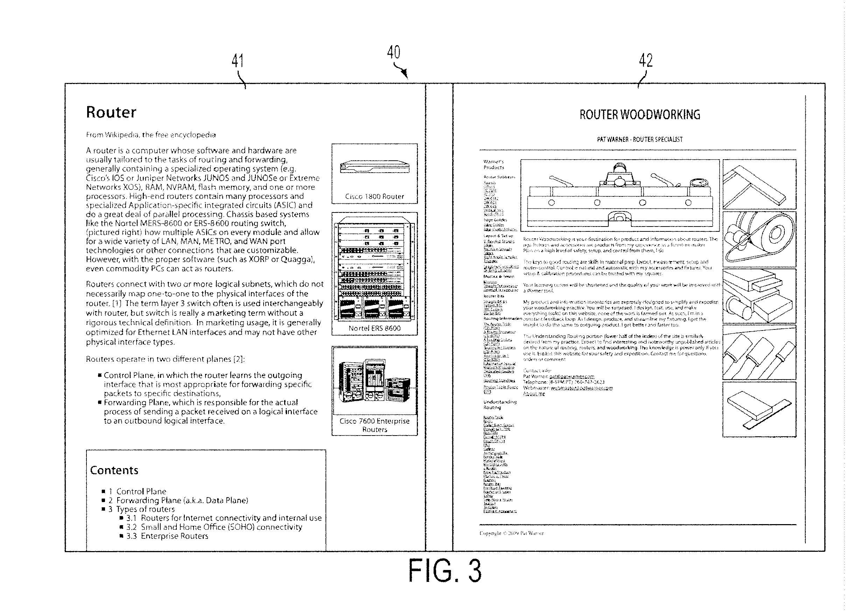

Notwithstanding, effectively targeting online advertising remains a challenge. Inherently ambiguous terms, like router, as further explained below with reference to FIGURES 3-8, lack sufficient context for differentiating between different markets to properly target online advertising. In response, conventional approaches employ key word combinations for placement on each Web page that contains all of the combined key words. Word combinations, though, increase business cost and create additional complexity, as effective combinations must first be identified and then evaluated over multiple auctions to gauge effectiveness.

Effective targeting also affects advertising market pricing and dynamics. Legitimate advertisers bid on key words linked to genuine products and services. On the other hand, illicit advertisers, popularly termed "spammers," seek out unpopular key words, which permits low bidding and placement of bogus or "spam" advertisements that may have no relation to the actual key words used. Such advertisements are placed for lack of sufficient competition. Contrarily, when auction prices are too high, online advertisers may become disenfranchised and leave, such as occurs in markets with valuable key words that artificially inflate bidding. Inexperienced bidders sustain price inflation until eliminated by financial loss. As a result, savvy advertisers segment markets by bidding to specialized user communities or by tuning their key words.

Finally, a single Web page may prove misleading or insufficiently precise as the sole basis for targeting. The problem of a false positive in the key word targeting of advertisements can arise when targeting logic is based only on the content of a particular Web page, which leads to placement of inappropriate or ineffective advertisements. Conventional approaches attempt to lower false positive rates by combining key words to avoid bidding into communities with extremely broad topics, but at the risk of missing advertising opportunities. Thus, effective targeting requires consideration of more than just a Web page's content, yet conventional approaches still fall short.

For instance, U.S. Patent No. 6,269,361, issued July 31, 2001, the disclosure of which is incorporated by reference, discloses a system and method for influencing a position on a search result list generated by a search engine. A Web site promoter can define a search listing for a search result list, select search terms relevant to the promoter's Web site, and influence a position for the search listing on an Internet search engine. Alternative search terms may be suggested. Later, when a user enters the search terms, the search engine will generate a search result list with the promoter's listing in a position influenced by parameters, such as bid amount or rank value. The search terms, though, are prospectively tied to specific Web content that is provided in the search result list and are susceptible to inappropriate placement.

U.S. Patent Publication No. 2004/0059708, published March 25, 2004, the disclosure of which is incorporated by reference, discloses a method and apparatus for serving relevant advertisements. Targeting information for an advertisement is identified by analyzing the content of a target document to identify a list of topics. Targeting information is compared to the topics list, and to determine that the advertisement is relevant to the target document. The topics, however, are typically defined by someone else, can have errors, and are often imprecise, even though bids are accepted by topic. As well, bad placement can occur with inherently ambiguous terms.

U.S. Patent Publication No. 2007/0260508, published November 19, 2007, the disclosure of which is incorporated by reference, discloses organizing advertisement listing information in a hierarchal structure. Prices and pricing rules are assigned to nodes in a hierarchy. Bid amounts are submitted according to node level, and Web content and advertisements are served within the hierarchical structure. Advertisers must switch over to a node-and-hierarchy approach when bidding, even though the hierarchical organization and node labels could have changed without notice and thus render a bid moot. Term ambiguity is not resolved.

User profile information has also been used to improve targeting, such as user location, content of Web pages visited, and previous searches. User information can be stored persistently as a targeting profile. Alternatively, information over multiple visits and Web sites can be aggregated to profile a user's interests. Profile information, though, can be considered objectionably invasive, as recently highlighted by privacy advocates who have begun petitioning for federal regulation.

For instance, U.S. Patent No. 6,285,987, issued September 4, 2001, the disclosure of which is incorporated by reference, discloses an Internet advertising system. A central server stores both advertisements and information about viewers, characteristics of Web sites, and other information relevant to deciding which advertisements should be displayed to particular viewers including demographic information and information as to what other sites the view has accessed in various time periods. Advertiser bids are evaluated in real time based on user profile characteristics.

Accordingly, what is needed is a way to effectively, yet unambiguously target advertisements to online information without violating the privacy of users.

### Summary

One embodiment provides a computer-implemented system and method for providing community-based advertising term disambiguation. Articles of digital information and a plurality of social indexes that are each associated with a social community are maintained. Each social index includes topics that each relate to one or more of the articles. The social community exhibiting the most closely-matched similarity to the advertising content is chosen based on their social indexes. The advertising content with the articles related to the topics included in the social index of the social community chosen is placed.

Still other embodiments will become readily apparent to those skilled in the art from the following detailed description, wherein are described embodiments by way of illustrating the best mode contemplated. As will be realized, other and different embodiments are possible and the embodiments' several details are capable of modifications in various obvious respects, all without departing from their spirit and the scope. Accordingly, the drawings and detailed description are to be regarded as illustrative in nature and not as restrictive.

### Brief Description of the Drawings

FIGURE 1 is a block diagram showing an exemplary environment for digital information sensemaking and information retrieval.
FIGURE 2 is a functional block diagram showing principal components used in the environment of FIGURE 1.
FIGURE 3 is a diagram showing, by way of examples, screen shots of two distinct sample Web pages concerning routers.
FIGURE 4 is a diagram showing, by way of examples, characteristic terms and top *n*-grams for articles on two distinct router topics.
FIGURE 5 is a diagram showing, by way of example, advertisements on two distinct router topics.
FIGURE 6 is a diagram showing, by way of example, top characteristic words for two landing pages for router advertisements of FIGURE 5.
FIGURES 7 and 8 are diagrams showing, by way of example, shared characteristic words concerning router topics.
FIGURE 9 is a flow diagram showing a method for providing community-based advertising term disambiguation in accordance with one embodiment.
FIGURE 10 is a flow diagram showing a routine for characterizing information for use with the method of FIGURE 9.
FIGURE 11 is a flow diagram showing a routine for creating coarse-grained topic models for use with the routine of FIGURE 10.
FIGURE 12 is a flow diagram showing a routine for optionally adjusting characteristic word score for use with the routine of FIGURE 11.
FIGURE 13 is a flow diagram showing a routine for comparing social communities to advertisements for use with the routine of FIGURE 9.
FIGURE 14 is a flow diagram showing a routine for determining other metrics for use with the routine of FIGURE 13.

### Detailed Description

### Glossary

Unless indicated otherwise, terms have the following meanings:
*Advertising expression:* A set of key words, patterns, or other advertisement-descriptive information that can be used by targeting logic to match online advertisements to notionally-related documents.
*Cited page:* A location within a document to which a citation in an index, such as a page number, refers. A cited page can be a single page or a set of pages, for instance, where a subtopic is extended by virtue of a fine-grained topic model for indexing and the set of pages contains all of the pages that match the fine-grained topic model. A cited page can also be smaller than an entire page, such as a paragraph that matches a fine-grained topic model.
*Coarse-grained topic model:* A topic model based on characteristic words or similarly broadly discriminating criteria that is used in deciding which topics correspond to a query. Coarse-grained topic models can be expressed as a set of characteristic words, which are important to a topic, and a score indicating the importance of each characteristic word. This topic model can also be created from positive training examples, plus a baseline sample of articles on all topics in an index. The baseline sample establishes baseline frequencies for each of the topics and the frequencies of words in the positive training examples are compared to the frequencies in the baseline samples. In addition to use in generating topical sub-indexes, coarse-grained topic models can be used for advertisement targeting, noisy article detection, near-miss detection, and other purposes.
*Community:* A group of people sharing main topics of interest in a particular broadly defined subject area online and whose interactions are intermediated, at least in part, by a computer network. *Augmented community:* A community that has a social index on a subject area. The augmented community participates in reading and voting on documents within the subject area that have been cited by the social index.
*Corpus:* An online collection or set of Web pages; electronically-stored articles, documents, publications, files, or books; or other digital information.
*Document:* An individual item of information, typically, an article, within a corpus. A document can also include a chapter or section of a book, or other subdivision of a larger work and may contain several pages on different topics.
*Evergreen index:* An evergreen index is a social index that continually remains current with the corpus.
*Fine-grained topic model:* A topic model based on finite state computing that is used to determine whether an article falls under a particular topic. Fine-grained topic models can be expressed as finite-state patterns, similar to search queries and can be created by training a finite state machine against positive and negative training examples.
*Information diet:* An information diet characterizes the information that a user "consumes," that is, reads across subjects of interest. Given a social indexing system, the user may join or monitor a separate augmented community for each of his major interests in his information diet.
*Online advertisement:* Content in the form of banner, text, image, pop-up, or other display means that is provided with or embedded in a document to attract user traffic to linked-in cited, or referenced advertiser Web sites or documents.
*Sensemaking:* Sensemaking is the process by which users go about understanding the world. Digital sensemaking is sensemaking intermediated by a digital infrastructure, such as today's Web and search engines. Digital sensemaking typically involves activities for gathering, extracting, and organizing information.
*Social indexing system:* An online information exchange infrastructure that facilitates information exchange among augmented communities, provides status indicators, and enables the passing of documents of interest from one augmented community to another. An interconnected set of augmented communities form a social network of communities. The information exchange can include advertising.
*Subject area:* The sub set of related, generally hierarchically-organized topics and subtopics categorized in a social index, which can include an evergreen index or its equivalent.
*Subtopic:* A single entry hierarchically listed under a topic within a social index. In an evergreen index, a subtopic is also accompanied by a fine-grained topic model that generally reflects greater discriminating ability than used by a parent topic.
*Topic:* A single entry within a social index. In an evergreen index, a topic is accompanied by a fine-grained topic model, such as a pattern, that is used to match documents within a corpus.

### Digital Information Sensemaking and Retrieval Environment

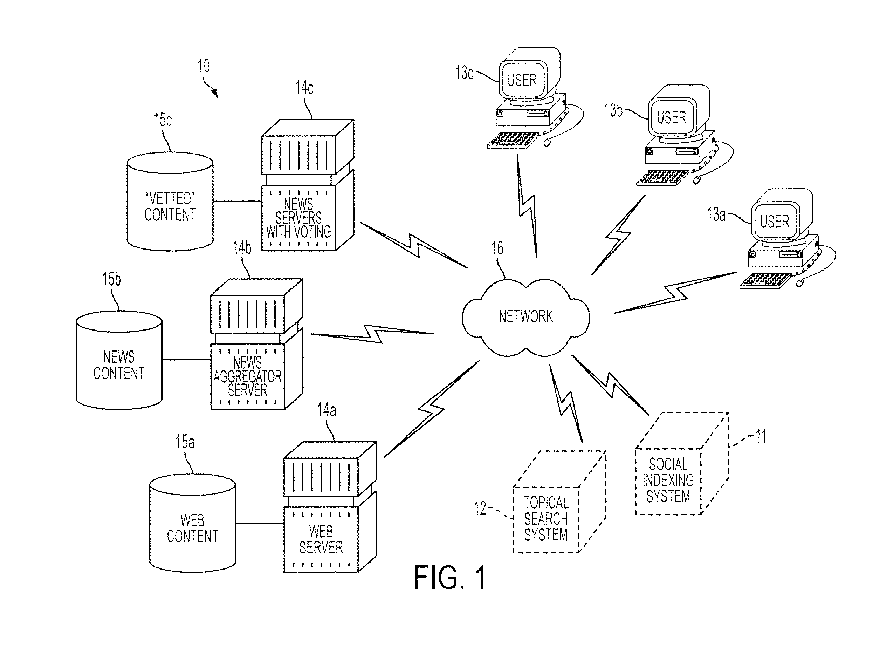

Digital information sensemaking and retrieval are related, but separate activities. The former relates to sensemaking mediated by a digital information infrastructure, which includes public data networks, such as the Internet, standalone computer systems, and open-ended repositories of digital information. The latter relates to the searching and mining of information from a digital information infrastructure, which may be topically organized through social indexing, or by other indexing source. FIGURE 1 is a block diagram showing an exemplary environment 10 for digital information sensemaking and information retrieval. A social indexing system 11 and a topical search system 12 work in tandem to respectively support sensemaking and retrieval.

In general, digital information is a corpus of information available in digital form. The extent of the information is open-ended, which implies that the corpus and its topical scope grow continually without fixed bounds on either size or subject matter. A digital data communications network 16, such as the Internet, provides an infrastructure for exchange of the digital information. Other network infrastructures are also possible, for instance, a non-public corporate enterprise network.

The network 16 provides interconnectivity to diverse and distributed information sources and consumers that respectively populate and access the corpus. Authors, editors, collaborators, and outside contributors continually post articles, Web pages, and the like to the network 16, which are maintained as a distributed data corpus through Web servers 14a, news aggregator servers 14b, news servers with voting 14c, and other information sources. These sources respectively serve Web content 15a, news content 15b, community-voted or "vetted" content 15c, and other information to users that access the network 16 through user devices 13a-c, such as personal computers, as well as other servers. For clarity, only user devices will be mentioned, although servers and other non-user device information consumers may similarly search, retrieve, and use the information maintained in the corpus.

In general, each user device 13a-c is a Web-enabled device that executes a Web browser or similar application, which supports interfacing to and information exchange and retrieval with the servers 14a-c. Both the user devices 13a-c and servers 14a-c include components conventionally found in general purpose programmable computing devices, such as a central processing unit, memory, input/output ports, network interfaces, and non-volatile storage. Other components are possible. Moreover, other information sources in lieu of or in addition to the servers 14a-c, and other information consumers, in lieu of or in addition to user devices 13a-c, are possible.

Digital information retrieval complement sensemaking. In one embodiment, a topical search system 12 is integrated into a social indexing system 11. The topical organization provided by the social indexing system 11 can be used advantageously by the topical search system 12, although other sources of indexing could also be used. Search queries from user devices 13a-c are executed against either all of the social indexes or a single focused index, and a dynamically focused and topically-related set of indexes and their top topics, or the top topics within the single focused index are respectively generated by the topical search system 12 for presentation with search results, such as disclosed in commonly-assigned U.S. Patent application Serial No. 12/354,681, filed January 15, 2009, pending, the disclosure of which is incorporated by reference. In addition, online advertising can be blended into topical searching and other retrieval activities by disambiguating the targeting used in landing advertisements on retrieved information through the topically-structured aspects of social indexing.

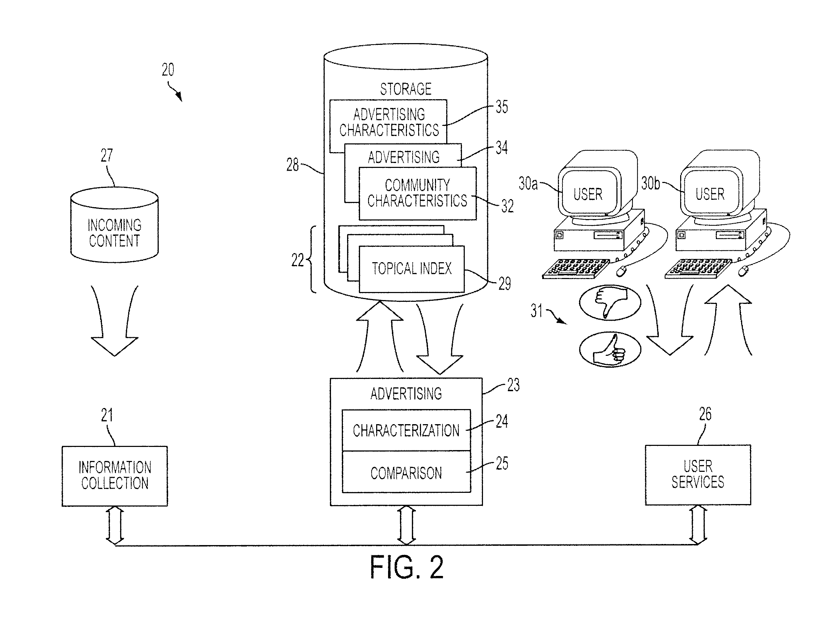

From a user's point of view, the environment 10 for retrieval appears as a single information portal, but behind the scenes is a set of logically separate but integrated services. Online advertising is introduced as an add-on to retrieval. FIGURE 2 is a functional block diagram showing principal components 20 used in the environment 10 of FIGURE 1. The components are focused on online advertising. Additional components or functional modules may be required to provide other related activities, such as discovery, prospecting, and orienting.

The components 20 can be loosely grouped into information collection 21, advertising 23, and user services 26 modules implemented on the same or separate computational platform. The information collection module 21 obtains incoming content 27 from the open-ended information sources. The incoming content 27 is collected by a media collector, which continually harvests new digital information from the corpus. The incoming content 27 can be stored in a structured repository, or indirectly stored by saving hyperlinks or citations to the incoming content in lieu of maintaining actual copies. Additionally, the incoming content 27 can include multiple representations, which differ from the representations in which the information was originally stored. Different representations could be used to facilitate displaying titles, presenting article summaries, keeping track of topical classifications, and deriving and using fine-grained topic models. Words in the articles could also be stemmed and saved in tokenized form, minus punctuation, capitalization, and so forth. Moreover, the fine-grained topic models created by the social indexing system 11 represent fairly abstract versions of the incoming content 27, where many of the words are discarded and word frequencies are mainly kept.

The incoming content 27 is preferably organized through social indexing under at least one topical social index 29, which may be part of a larger set of topical indexes 22 that covers all or most of the information in the corpus. In a further embodiment, the topical index 29 could be an evergreen index built through a social indexing system, such as described in commonly-assigned U.S. Patent Application "System and Method for Performing Discovery of Digital Information in a Subject Area," Serial No. 12/190,552, filed August 12, 2008, pending, the disclosure of which is incorporated by reference. The evergreen index contains fine-grained topic models, such as finite state patterns, that can be used to test whether new incoming content 27 falls under one or more of the index's. The social indexing system applies supervised machine learning to bootstrap training material into the fine-grained topic models for each topic and subtopic in the topical index 29. Once trained, the evergreen index can be used for index extrapolation to automatically categorize new information under the topics for pre-selected subject areas.

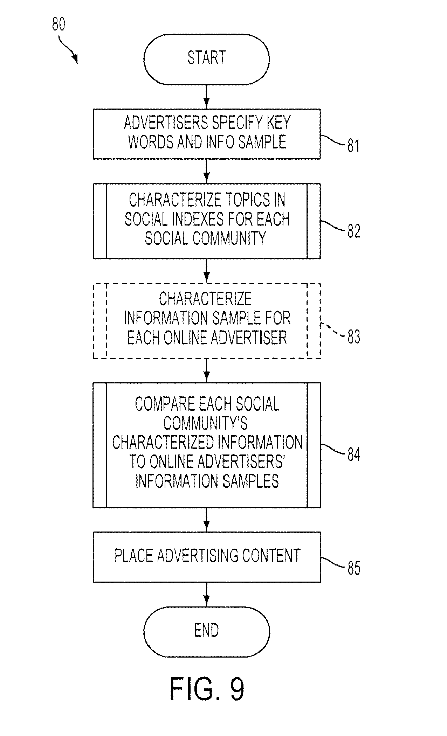

The advertising module 23 disambiguates targeting of online advertising, as further described below beginning with reference to FIGURE 9. The advertising module 23 includes a characterization submodule 24 that generates a set of community characteristics 32 for each social community. In a further embodiment, the characterization submodule 24 instead generates a set of advertising characteristics 35 for the advertising 34 provided by each online advertiser. In addition, the advertising module 23 includes a comparison submodule 25 that compares and matches advertising content 34 by determining a similarity metric, which identifies the social community with topics reflecting the strongest relevance to each advertiser's products or services. In a further embodiment, online advertising could also be broadened by identifying the topics associated with articles or parts of a social index of particular interest to a user, such as described in commonly-assigned U.S. Patent Application, entitled "System and Method for Providing Topic-Guided Broadening of Advertising Targets in Social Indexing," Serial No. 12/436,060, filed May 5, 2009, pending, the disclosure of which is incorporated by reference. The sets of topical indexes 22, community characteristics 32, advertising 34, and advertising characteristics 35 are maintained in centralized storage 28.

Finally, the user services module 26 provides a front-end to users 30a-b to access the set of topical indexes 22 and the incoming content 27, to perform search queries on the set of topical indexes 22 or just a single topical index 29, and to access search results. In a still further embodiment, each topical index 29 is tied to a community of users, known as an "augmented" community, which has an ongoing interest in a core subject area. The community "vets" information cited by voting 30 on articles categorized under each topic.

### Online Advertising

In the life cycle of an online advertisement three events are relevant to earning advertising revenue. First, a presentation event occurs whenever an advertisement is displayed on a Web page. The count of displays, or impressions, is the basis for computing revenues according to a CPM (cost per thousand or "mille" impressions) price model. Second, click-through event occurs whenever a user clicks on a displayed advertisement. The count of click-through events is usually the basis for computing revenues according to a CPC (cost per click) price model. Third, a conversion event occurs whenever a user takes an action on over advertiser's site, such as registering or purchasing a product. Generally, advertisers keep statistics on conversion events to estimate what they are willing to pay for CPM or CPC advertisements based on a projection of expected conversion rates and potential revenue.

Both targeting to appropriately-matched content and properly placing online advertisements within matching Web pages influence revenue potential. Revenue opportunity can be lost through ineffective targeting, and poorly-placed advertisements may be obscured, overlooked, or simply ignored. A social index can both improve targeting and enhance placement of online advertisements. Social indexing displays articles in a topically-organized subject area that helps users to quickly access information on topics that they specify. Moreover, a social index is used by a community that organizes articles of interest to an audience larger than a single user. A social index can thus be used in online advertising to target advertisements to information services that partition users into such communities, thereby increasing advertising revenue potential while avoiding invasive user profiling practices.

### Method

Conventionally, relying solely on advertiser-supplied key words to target online advertising risks contextual ambiguity and inappropriate placement. FIGURE 3 is a diagram showing, by way of examples, screen shots 40 of two distinct sample Web pages 41, 42 concerning routers. The key word "router," for example, has several meanings. In one sense, a router is a network message traffic management device, as illustrated by a Wikipedia Web page 41 about networking routers. In another sense, a router is a woodworking power tool, as illustrated by a Web page 42 about specialized router tools for woodworkers.

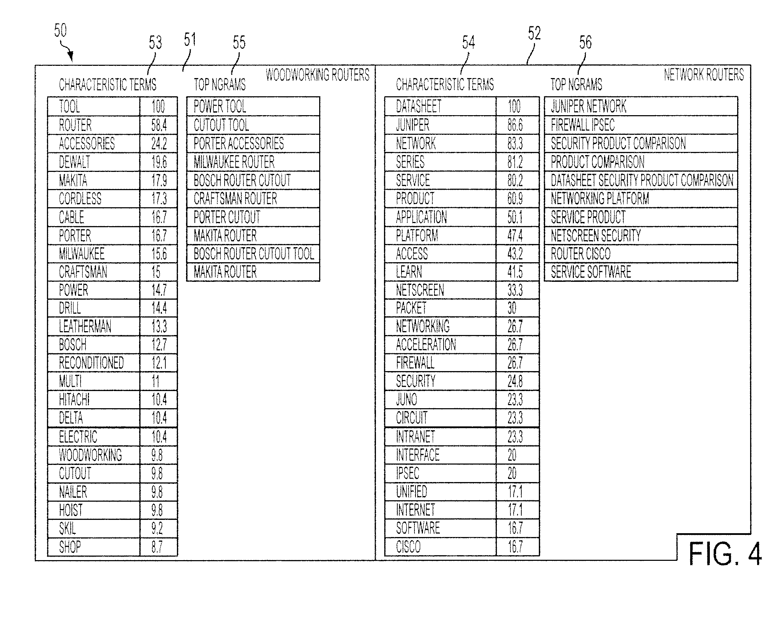

Among articles about routers, these two Web pages 41, 42 would be of potential interest to different communities of users. The networking router Web page 41 might be of interest to people concerned with computer communications and the use of routers to configure networks. The woodworking router Web page 42 might be of interest to home craftsmen, who are interested in woodworking tools. FIGURE 4 is a diagram showing, by way of examples, characteristic terms 53, 54 and top n-grams 55, 56 for articles on two distinct router topics 51, 52. The tables concerning woodworking routers 51 were determined over a few articles relevant to a wood craft community that concern routers. The table of characteristic terms 55 was determined by identifying all of the words that appear in the articles. The system counted the frequency of each word appearing in the articles on routers using a version of term frequency-inverse document frequency (TF-IDF) weighting. The frequency of each word in the selected articles was divided by the frequency of the word in a larger corpus, thereby yielding an estimate of uniqueness.

This computation identifies words that are more frequent in the set of articles than the words are in the larger corpus, that is, words that are characteristic of the subject area. The figures were then normalized over 100 and the table was sorted. Among the words in the articles about woodworking routers, the most characteristic word was "tool," followed by "router," "accessories," "Dewalt," "Makita," and so on through "shop." The table of most frequent n-grams 55 was made up of characteristic words using sequences of adjacent words that were found in the same collection of articles. The most frequent *n*-gram was "power tool," followed by "cutout tool," and "Porter accessories," and so forth. The tables concerning networking routers 52 were similarly determined over a few articles relevant to a computer networking community concerning routers. The same computations were performed and the results show striking differences in the found tables of characteristic words 54 and top *n*-grams 56. The most characteristic word was "datasheet," followed by "Juniper," "network," "series," "service," and so on through "Cisco." The top n-gram was "Juniper network," followed by "firewall ipsec," "security product comparison," and so forth. These lists are derived from the articles in the corpus representing the interests of the community and the computed figures tend to stabilize as the size of the corpus increases. Sampling techniques can be used over a document collection, not only to limit the time of the computation, but also to deliberately bias the computation, for instance, by subtopic, towards newer articles, or towards highly-ranked articles.

These tables 53-56 are examples of representations intended to characterize the subject area of a set of articles. Similar representations underlie the creation of visual presentations like "tag clouds." A related family of computations looks for words that appear in the "neighborhood" of a particular word, such as reflected by the frequency of words that appear within a forty-word window of "router" within an article or over a document collection, which serves as an "information scent." Still other representations could be used.

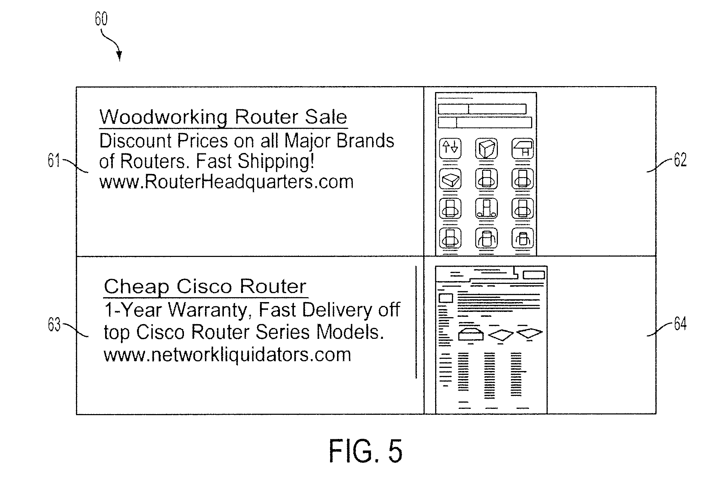

The resolution of contextual ambiguity can be explained through an example. Network Liquidators is a fictitious company that offers refurbished equipment, such as routers, for sale on the Web. Router Headquarters is also a fictitious retailer that specializing in wood router accessories and tools. Both companies advertised on the Web in January 2008 using the key word "router." FIGURE 5 is a diagram showing, by way of example, advertisements 61, 63 on two distinct router topics for these companies and also the Web pages 62, 64 that would be reached by clicking on their respective advertisements, called "landing pages." The Router Headquarters landing page 62 has about 2,800 words and the Network Liquidators landing page 64 has about 800 words. Since the advertised products for these companies are so different, the products are likely to appeal to people with different interests.

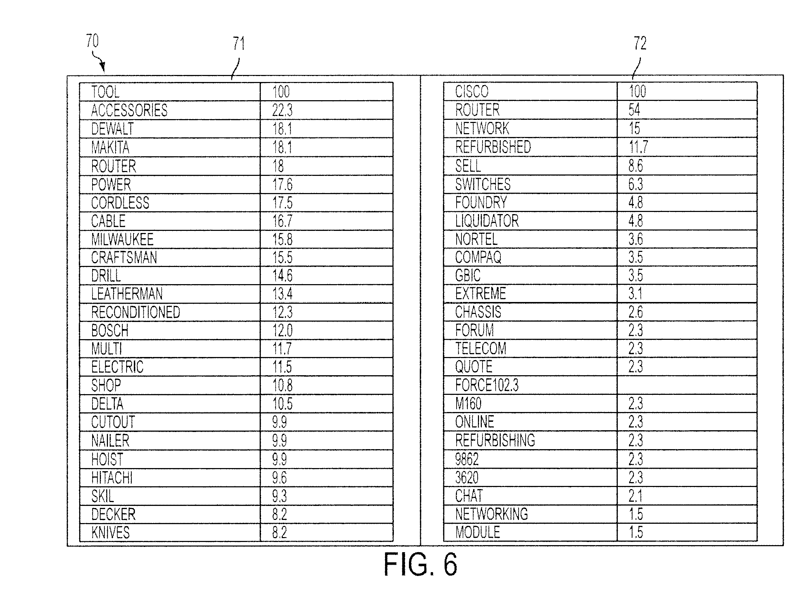

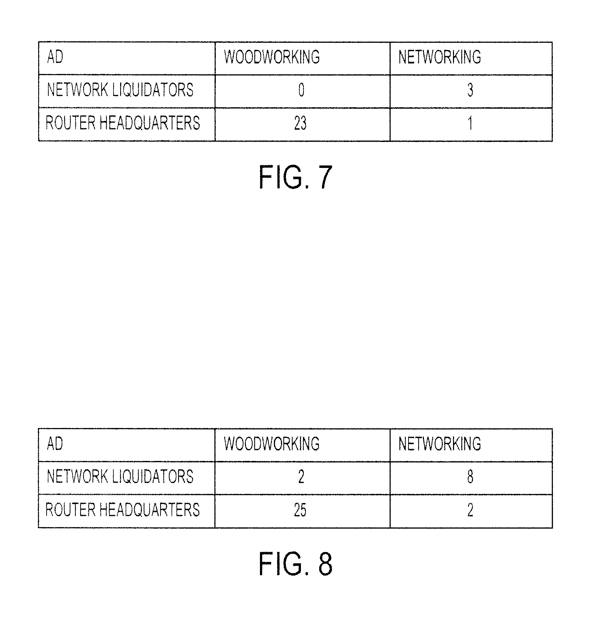

Market segmentation requires matching advertisements to user communities. The lists of top characteristic words are one source of information for market segmentation, which can be determined as described above with reference to FIGURE 3. FIGURE 6 is a diagram showing, by way of example, top characteristic words for the two landing pages 62, 64 for the router advertisements of FIGURE 5. The table 71 of top characteristic words for Router Headquarters appears on the left and the table 72 of top characteristic words for Network Liquidators appears on the right. FIGURES 7 and 8 are diagrams showing, by way of example, shared characteristic words concerning router topics. Referring first to the table shown with reference to FIGURE 7, the advertisement for Network Liquidators has more in common with the networking community, and the advertisement for Router Headquarters has more in common with the woodworking community.

A variant of this metric may be more indicative and is somewhat easier to compute. The corpus available for analysis is expected to be generally much bigger for a community, than for a product. Thus, the computation of characteristic words may be more meaningful over a community than over an advertisement. Referring next to the table shown with reference to FIGURE 8, the characteristic words for a user community, which appear in an advertisement's landing page are determined. In this case, eight of the characteristic words from the networking community appeared in the Network Liquidators landing page 64, and all twenty-five of the top characteristic words of the woodworking community appeared in the Router Headquarters landing page 62.

Advertising may be presented with topical search results, or in concert with other activities. For example, a user may be following stories or topics that appear on a news page, or on topics that appear in indexes that appear on a Web page serving their information diet. Both of these starting points take a user deeper into the organized information of a social index and any page that displays information by topic is a potential locus for advertising. In general, the deeper a user goes into a social index, the more specialized the topic becomes and the greater the potential for high-precision targeting of advertisements. The path to this information can be via a direct article lookup, by performing a topical search, as the result of following an informational or topical trail, or by some other manner of seeking and accessing information.

Accordingly, online advertisements are targeted to online communities using community information from shared topical social indexes. A goal is to reduce improper placement of ads as caused by ambiguity in word meanings and senses. In the context of social indexing, communities are organized around subject areas. Each community identifies a set of online information sources, which the system periodically gathers and analyzes. A social index embodies a set of index entries, which are automatically matched to the gathered articles, enabling it to organize the presentation of material by topic. A community voting system is used to rank the gathered articles by quality.

Each social index aggregates content analysis across topically-related articles that have been grouped under topics chosen by a social community of online users. Online advertising is thus matched to the social community most likely to have an interest in the underlying products or services offered, rather than being targeted solely on the content of a particular Web page or user profile. FIGURE 9 is a flow diagram showing a method 80 for providing community-based advertising term disambiguation in accordance with one embodiment. The method 80 is performed as a series of process or method steps performed by, for instance, a general purpose programmed computer, such as a server.

Advertising revenue potential can be improved by reducing false-positives in targeting using social community information. Every online advertiser specifies advertising content 34, which is placed upon successfully winning an advertising auction or by satisfying other placement criteria. To facilitate targeting, each advertiser specifies key words and a sample of information (step 81). The information sample can include a description of the goods or services offered, such as found on an advertisement's "landing page," that is, the Web page served following a click-through event. Additional product information could also be provided by the advertiser.

Efficient marketing segmentation requires online advertisements to be matched to relevant social communities. The matching can be achieved by characterizing both the information samples provided by the online advertisers and the topics appearing under the social indexes belonging to each social community. Characterizing each advertiser's information sample (step 83) allows each potential advertisement to be matched to those social communities having the most in common with the advertiser's goods or services. Characterizing each social community's topics instead for matching to potential advertisements (step 82) provides comparable matching results, but also offers attractive computational efficiencies. Social communities are organized around subject areas using social indexes. Each community identifies a set of online information sources, from which a social indexing system 11 (shown in FIGURE 1) periodically gathers and analyzes new articles. Each social index embodies a set of index entries, which are matched to the gathered articles to self-organize the presentation of the articles by topic. Additionally, community voting can rank the gathered articles by quality.

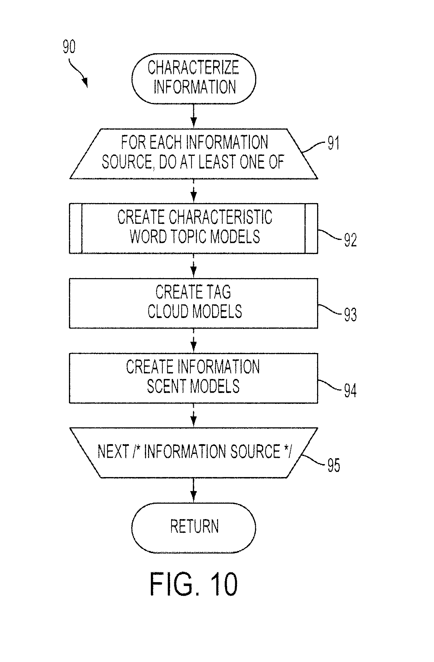

In general, the corpus available for analysis through social indexing is expected to be much larger for a social community, than the information samples for products or services to be advertised. The characterization of the information in an index can be used for multiple purposes, such as supporting topic-directed searches, as disclosed in commonly-assigned U.S. Patent application Serial No. 12/354,681, filed January 15, 2009, pending, the disclosure of which is incorporated by reference. Consequently, in one embodiment, the topics in the social indexes for each social community are characterized (step 82), while, in a further embodiment, the information samples for each online advertiser are characterized (step 83), as both further described below beginning with reference to FIGURE 10.

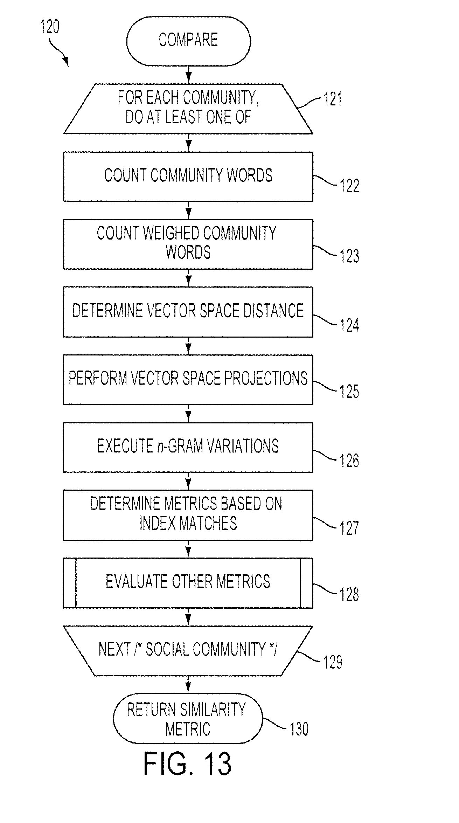

Thereafter, each social community's characterized information is compared to the online advertisers' information samples (step 84), from which a similarity metric is generated, as further described below with reference to FIGURE 13. In a further embodiment, the advertisers' characterized information is compared to the topics in the social indexes for each of the social communities. Each similarity metric can be provided directly to an online advertiser, or to a publisher, advertising broker, or other third party charged with overseeing placement of online advertisements. The similarity metric could also be provided through an application programming interface to a third party advertising server or other outside system.

Targeting advertisements placement based on social community ensures that the advertisements appear in an appropriate and unambiguous context. Thus, the advertising content is placed in the articles appearing under the topics for the most-closely-matched social community's social index (step 85). The advertisements could be placed based on winning key word bids through an auction-style format or other inter-advertiser competition, or by other placement criteria. In a further embodiment, advertiser key words are matched to social community information without a key word auction. For example, advertisers could provide their advertisements and information samples, and bid on the placement of their advertisements. The advertisers would be matched to the relevant communities and advertisement selection would be determined solely by the auction. Click-through estimation and related techniques would serve in the same manner as in key word auctions.

In a further embodiment, online advertisements are targeted using implicit communities, rather than explicit social communities. Implicit communities could be determined on-the-fly by tracking, for example, statistics about click through and possibly conversion events. The characteristics of the Web pages over which click-through was high can be analyzed to cluster those Web pages by their characteristic words, or other indicia. Topics or subject areas that might have interest to implicit communities would thereby be identified.

### Characterizing Information

Either or both of the information samples provided by the online advertisers, or the topics appearing under the social indexes belonging to each social community must be characterized prior to comparison and determination of a similarity metric. FIGURE 10 is a flow diagram showing a routine 90 for characterizing information for use with the method 80 of FIGURE 9. The information from each information source, whether an advertiser's information sample, or topics from a social community's social index, is characterized using one or more characterization techniques (steps 91-95).

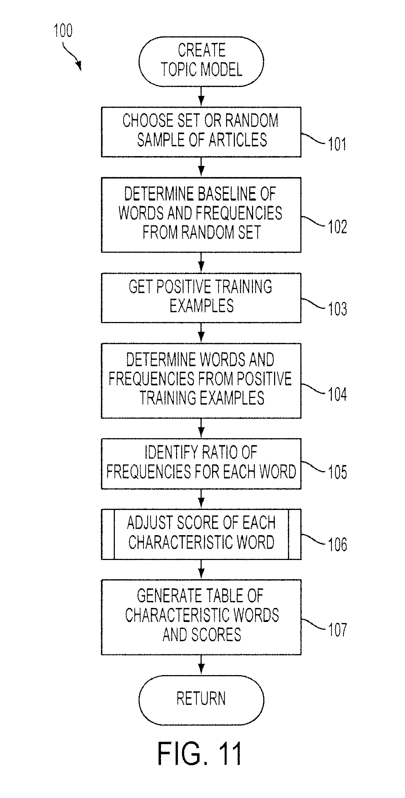

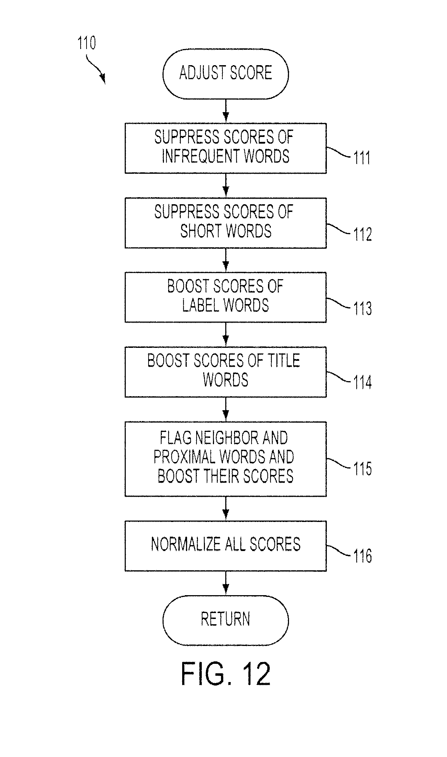

For instance, a set of characteristic word topic models could be formed by identifying the frequency of all of the words that appear in the information (step 92), such as further described below with reference to FIGURES 11 and 12. In a further embodiment, the most frequent n-grams, which are sequences of adjacent characteristic words, can be determined in lieu of singleton characteristic words. Other sampling techniques can be used over the information, not only to limit the time of the computation, but also to deliberately bias the computation by subtopic, towards newer articles, or towards highly-ranked articles, through, for instance, visual presentations, such as "tag clouds" (step 93). A related family of computations evaluate words that appear in the "neighborhood" of a given word. For example, the frequency of words that appear within a forty-word window of a particular word could be determined to provide an "information scent" (step 94). Moreover, the foregoing set of characterization techniques is not exhaustive and other techniques could be employed to provide acceptable results.

### Characteristic Word Topic Models

Characteristic words are but one way to characterize the information samples provided by the online advertisers, or the topics appearing under the social indexes belonging to each social community. Characteristic word, or "course-grained," topic models identify words that appear more frequently than other words in a larger information corpus. Thus, the topic models find the words that are characteristic of a subject area.

The coarse-grained topic models can be pre-computed prior to the targeting of online advertising. FIGURE 11 is a flow diagram showing a routine 100 for creating coarse-grained topic models for use with the routine 90 of FIGURE 10. The coarse-grained topic models contain characteristic words and a score that reflects the relative importance of each characteristic word.

Characteristic words are useful in discriminating text about a topic and are typically words selected from the articles in the applicable corpus, which can include Web pages, electronic books, or other digital information available as printed material. Initially, a set or random sampling of articles is selected out of the corpus (step 101). A baseline of characteristic words and their frequencies of occurrence are extracted from the articles selected (step 102). Baselines for topics in an index 29 are determined over the corpus of the index 29. Baselines for the complete set of indexes 22 are computed over the overall system corpus, which is the corpora for all of the individual indexes 29. To reduce latency, the frequencies of occurrence of each characteristic word in the baseline can be pre-computed. In one embodiment, the number of articles appearing under the topics in an index is monitored, such as on an hourly basis. Periodically, when the number of articles has changed by a predetermined amount, such as ten percent, the frequencies of occurrence are re-determined.

Next, a set of positive training examples, as generally selected by a user, is obtained (step 103). The positive training examples can be the same set of articles used during supervised learning when building fine-grained topic models for an evergreen index, described *supra.* In a further embodiment, a sampling of articles that match the fine-grained topic models could be used in lieu of the positive training examples. Characteristic words are extracted from the positive training examples and the frequency of occurrence of each characteristic word in the positive training examples is determined (step 104). A measure or score is assigned to each characteristic word using, for instance, TF-IDF weighting, which identifies the ratio of frequency of occurrence of each characteristic word in the positive training examples to the frequency of occurrence of each characteristic word in the baseline (step 105). The score of each characteristic word can be adjusted (step 106) to enhance or discount the importance of the characteristic word to the topic, as further described below with reference to FIGURE 12. Finally, a table of the characteristic words and their scores is generated (step 107) for use in the online advertising request processing stage. The table can be a sorted or hashed listing of the characteristic words and their scores. Other types of tables or listings are possible.

Different "actors" perform the actions in creating coarse-grained models. The system chooses a set or random sampling of articles, and determines a baseline. An index manager, who can be a person, chooses positive training examples. The remaining steps are performed by the system. The selection of positive training examples can be completed ahead of time and prior to any other steps in the routine. The routine takes as input a set of articles in a corpus, and a set of articles from the corpus that have been designated as positive training examples. The same observation holds where the positive training examples are articles that match the fine-grained models. Here, the fine-grained models come from a "default training algorithm," which creates fine-grained patterns based on topic labels, such as further described in commonly-assigned U.S. Patent Application, Serial No. 12/360,825, filed January 27, 2009, pending, the disclosure of which is incorporated by reference. These two approaches to creating fine-grained topic models are called "default topic training" and "example-based topic training."

The score of each characteristic word reflects a raw ratio of frequencies of occurrence. FIGURE 12 is a flow diagram showing a routine 110 for optionally adjusting characteristic word score for use with the routine 100 of FIGURE 11. Heuristically, the score of each characteristic word can be adjusted in several ways depending upon context. For instance, the scores of infrequent words, that is, words that appear fewer than a minimum number of times in the corpus or in the set of cited materials can by suppressed or reduced (step 111) by, for example, 25 percent. Similarly, the scores of words with a length of less than a minimum threshold of characters can be suppressed (step 112) by a similar percent, as short words are not likely to have high topical significance. Conversely, words that appear in labels or in titles reflect strong topicality and their scores are boosted or increased (steps 113 and 114, respectively) by the number of times that the word appears in the sample. Typically, all label words are included as characteristic words. Lastly, the scores of words appearing adjacent to label words, that is, neighboring words, and "proximal" words appearing around label words within a set window are boosted (step 115). Normalized thresholds are applied during neighboring and proximal word selection. Default thresholds of eight and fifteen percent of the maximum score are respectively applied to neighboring and proximal words with a set window size of eight words. Other representative thresholds and lengths can be used. Finally, the scores of the characteristic words are normalized (step 116). The characteristic word having the highest score is also the most unique word and that score is set to 100 percent. The scores of the remaining characteristic words are scaled based on the highest score. Thus, upon the completion of characteristic word selection, each topic in the index has a coarse-grained topic model, which has been expressed in terms of characteristic words that have been normalized over the materials sampled from the corpus.

### Comparing Characterized Information

The best-matched candidate communities are selected by comparing each social community's characterized information to the online advertisers' information samples. Goodness of fit is measured by a similarity metric that quantifies the comparisons. FIGURE 13 is a flow diagram showing a routine 120 for comparing social communities to advertisements for use with the routine 80 of FIGURE 9. The characterized information from each social community is compared using one or more comparison techniques (steps 121-129), which include:

### Counting Community Characteristic Words Appearing in the Information

*Sample* (step 122). The top characteristic words are computed for each social community, such as described *supra.* The number of the top characteristic words that appear in an advertiser's landing page, or other information sample, becomes a similarity metric, which reflects a social community's potential interest in a product or service. The most relevant advertisements have the largest number of characteristic words appearing in the corresponding information sample.

*Weighed Counting of Community Characteristic Words* (step 123). Extra weight can be awarded to the most characteristic words of each social community. The similarity metric is the number of weighed characteristic words that appear in an advertiser's landing page. In a further embodiment, extra weight is given to characteristic words that repeatedly appear in the landing page, or other advertiser information sample.

*Vector-Space Distance* (step 124). Probabilistic approaches over vector spaces can also be used to estimate relatedness. A term vector is treated as a point in a vector space. The closer two points are in the vector space, the greater the degree of relatedness. An estimate of relatedness is reformulated as the probability, based on term usage, that a given article was drawn from the same characteristic sample in a given universe of documents. The distance between two vectors is computed by taking, for instance, the square root of the squared differences of coefficients for each term. Two term vectors are close if the term vectors have roughly the same coefficients for all of their terms. In a perfect match, the distance would be zero. In a further embodiment, dimensional reduction techniques can be used to reduce the number of terms used in the computation by combining terms that are highly correlated.

*Vector-Space Projections* (step 125). Projections of term vectors are measured. The more similar the projection of the term vector, the greater the relatedness. The importance of each term is determined by its weight and an estimate of relatedness is determined by means of a dot-product of term vectors. A dot product is computed between the term vector representing the advertiser's product or service information and a term vector representing the community's interests. Communities having the highest dot products with the product or service information are estimated to have the greatest interest in the product.

*N-gram Variations* (step 126). Vector space projections take individual terms as basic elements. However, meaning can alternatively be conveyed using phrases represented by sequences of words. Common *n*-grams can be determined over the document sets, or on the combination of frequencies of characteristic terms and frequencies of characteristic *n*-grams.

*Metrics Based on Index Pattern Matches* (step 127). The topical index structure of a community and a prior computation of patterns that recognize topics are exploited. Each community index classifies the advertiser's information sample by topic, such as by matching a pattern for each topic against the advertiser's information. Various metrics can then be computed for each social community. For example, one similarity metric is to simply count the number of subtopics whose patterns match the landing page. The number or percentage of matching patterns represents a similarity metric, which increases when the advertisement is relevant to the social community's interests.

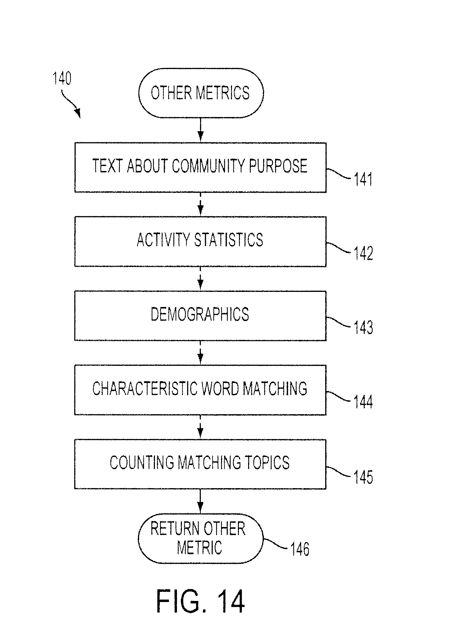

*Other Metrics* (step 128). A similarity metric measures goodness of social community-to-advertiser fit. Other metrics could also be generated for use in combination with the similarity metric, as further described below with reference to FIGURE 14.

The foregoing set of comparison techniques is not exhaustive and other techniques could be employed to provide acceptable results. The similarity metric is returned for use in placing advertisements (step 130).

### Other Metrics

Additional metrics can be derived from other sources of information to help guide social community selection. FIGURE 14 is a flow diagram showing a routine 140 for determining other metrics for use with the routine 120 of FIGURE 13. The other metrics are determined using one or more techniques (steps 141-146), which include:
*Text about Community Purpose* (step 141). Each social community can have a textual descriptions that describes the community's purpose. These descriptions can be used by advertisers in selecting those communities in which to potentially advertise. The descriptions can be searched for and matched against advertising key words. The words in the descriptions can also be compared to words in the advertiser's product or service descriptions to provide an indication of overlap in terminology.
*Activity Statistics* (step 142). Statistics can be computed from a social community's online profile, which can include, for example, data about the community's size in terms of active members and visitors.
*Demographics* (step 143). Advertisers can match their goods or products against demographic information about a social community, either derived from the topics in the community's social index or collected by questionnaires and sampling. Demographics for a community can be determined independently of the actual users to preserve personal privacy by studying a population sample to profile who is interested in the topics of community.
*Characteristic Word Matching* (step 144). A metric can compare the characteristic words used by a social community across all topics against the terms in the advertiser's information. For example, the metric can count the number of characteristic words that match against the advertiser's information sample.
*Counting Matching Topics* (step 145). The patterns associated with the topical patterns of a social community can be matched against an advertiser's information sample. For example, for each community, the number or percentage of topic patterns that match the advertiser's information sample can serve as a metric.
The foregoing set of other metrics is not exhaustive and still further metrics could be generated and incorporated into the community selection process. Each of the other metrics is returned for use in placing advertisements (step 146).

While the invention has been particularly shown and described as referenced to the embodiments thereof, those skilled in the art will understand that the foregoing and other changes in form and detail may be made therein without departing from the spirit and scope.

## Claims

1. A computer-implemented system for providing community-based advertising term disambiguation, comprising:
articles of digital information and a plurality of social indexes that are each associated with a social community with each social index comprising topics that each relate to one or more of the articles;
a computer comprising a processor and memory within which code for execution by the processor is stored, comprising:
a social indexing module for choosing the social community exhibiting the most closely-matched similarity to the advertising content based on their social indexes; and
an advertisement processing module for placing the advertising content with the articles related to the topics comprised in the social index of the social community chosen.

2. A system according to claim 1, further comprising:
a matching submodule for matching advertising content, for each social community, comprising:
a characteristics determination submodule for characterizing a plurality of the articles related to the topics comprised in the social index associated with the social community into social community characteristics; and
an estimation submodule for estimating similarity of the advertising content and the social community characteristics for the social community.

3. A system according to claim 1 or claim 2, further comprising:
a matching submodule for receiving a plurality of bids for placement of advertising content from a plurality of online advertisers, matching the advertising content for each of the online advertisers to the social communities, and placing only the advertising content comprised with the winning bid.

4. A computer-implemented method for providing community-based advertising term disambiguation, comprising:
maintaining articles of digital information and a plurality of social indexes that are each associated with a social community with each social index comprising topics that each relate to one or more of the articles;
choosing the social community exhibiting the most closely-matched similarity to the advertising content based on their social indexes; and
placing the advertising content with the articles related to the topics comprised in the social index of the social community chosen.

5. A method according to claim 4, further comprising:
for each social community, matching advertising content, comprising:
characterizing a plurality of the articles related to the topics comprised in the social index associated with the social community into social community characteristics; and
estimating similarity of the advertising content and the social community characteristics for the social community.

6. A method according to claim 4 or claim 5, wherein the social community characteristics comprises at least one of characteristic word topic models, tag cloud models, and information scent models.

7. A method according to any of claims 4 to 6, further comprising:
building each characteristic word topic model as a coarse-grained topic model for each of the topics comprised in the social index for each social community with each coarse-grained topic model comprising characteristic words comprised in each of the articles related to the topic.

8. A method according to any of claims 4 to 7, further comprising:
selecting a random sampling of the articles relating to each of the topics comprised in the social index for each social community;
determining frequencies of occurrence of the characteristic words comprised in the articles in the random sampling and in positive training examples;
identifying a ratio of the frequencies of occurrence for the characteristic words comprised in the random sampling and the positive training examples; and
including the ratios of the characteristic words as the scores of the coarse-grained topic models.

9. A method according to claim 8, further comprising:
monitoring a number of articles comprised in the topics of the social index; and
periodically re-determining the frequencies of occurrence of the characteristic words comprised in the articles in the random sampling when the number of articles has changed by a predetermined amount.

10. A method according to claim 9, further comprising:
selecting a sampling of articles matching fine-grained topic models for each topic in lieu of the positive training examples.

11. A method according to any of claims 4 to 10, further comprising:
characterizing the advertising content into advertising characteristics; and
estimating similarity of the advertising characteristics and the articles related to the topics comprised in the social indexes of each social community,
wherein the advertising characteristics comprises at least one of characteristic word topic models, tag cloud models, and information scent models.

12. A method according to any of claims 4 to 11, further comprising:
determining the similarity to the advertising content, comprising at least one of:
counting characteristic words comprised in the articles related to the topics comprised in the social index associated with the social community and appearing in the advertising content;
counting the weighted top characteristic words comprised in the articles related to the topics comprised in the social index associated with the social community and appearing in the advertising content;
counting characteristic words comprised in the articles related to the topics comprised in the social index associated with the social community and characteristic words comprised in the advertising content;
determining a vector space distance comprising term vectors comprised of words in the articles related to the topics comprised in the social index associated with the social community and word comprised in the advertising content;
determining a vector space projection of the term vectors;
evaluating n-grams comprised of select pluralities of characteristic words comprised in the articles related to the topics comprised in the social index associated with the social community and appearing in the advertising content; and
evaluating topical structure of the social index associated with the social community against the advertising content.

13. A method according to any of claims 4 to 12, further comprising:
evaluating at least one other metric in combination with the similarity to the advertising content, comprising at least one of:
evaluating a textual description associated with each of the social communities against the advertising content;
analyzing statistics comprised of activities performed by members of each of the social communities;
analyzing demographics associated with a plurality of members of each of the social communities;
comparing characteristic words comprised in the articles related to all of the topics comprised in the social index associated with each of the social communities against the advertising content; and
comparing the topics comprised in the social index associated with each of the social communities against the advertising content.
